# EUROPEAN PATENT APPLICATION

(11) **EP 1 092 345 A1**
(43) Date of publication of application: **18.04.2001**
(21) Application number: 00905083.2
(22) Date of filing: 24.02.2000
(51) Int. Cl.: A01J 5/00, A01J 5/04

(54) **MILK COLLECTING-DISTRIBUTING MECHANISM FOR ANIMALS**

(30) Priority: 01.03.1999 ES 9900487; 24.02.2000 ES 200000432
(71) Applicant: Izagirre Irure, Josu, E-20014 Donostia-San Sebastian (ES)
(72) Inventor: Izagirre Irure, Josu, E-20014 Donostia-San Sebastian (ES)
(86) International application number: ES0000065
(87) International publication number: WO0051416

(57) **Abstract**

The invention relates to a milk collecting-distributing mechanism for animals (cows, sheep, goats, etc.) designed to collect milk from a milking operation in a closed container. Said mechanism consists of a body and a collecting-distributing funnel. The body can be fixed to a previously installed container or support. Said milk collecting-distributing mechanism performs three main functions: firstly, to supply the necessary air flow so that a series (n = 1, 2, 3...) of nipple sets (having one, two, three, four, etc. nipples) can work simultaneously and continuously; secondly, to collect simultaneously and continuously into a previously installed container or collect and distribute into said container the milk obtained by milking with series (n = 1, 2, 3...) of the nipple set by means of a duct and thirdly, owing to the fact that this is a cyclic and continuos milking operation, to enable cyclic and continuos rotation either manually or automatically of the collecting-distribution funnel (of the nipple sets) during the time that the milking operation is carried out.

## Description

The invention relates to a milk collecting-distributing mechanism for animals (cows, sheep, goats, etc.) designed to collect milk from a milking operation in a dosed container. Said mechanism consists of a body and a collecting-distributing funnel. The body can be fixed to a previously installed container or support Said milk collecting-distributing mechanism performs three main functions: firstly, to supply the necessary air flow so that a series (n = 1, 2, 3...) of nipple sets (having one, two, three, four, etc. nipples) can work simultaneously and continuously; secondly, to collect simultaneously and continuously into a previously installed container or collect and distribute into said container the milk obtained by milking with series (n = 1, 2, 3...) of the nipple set by means of a duct and thirdly, owing to the fact that this is a cyclic and continuos milking operation, to enable cyclic and continuos rotation either manually or automatically of the collecting-distribution funnel (of the nipple sets) during the time that the milking operation is carried out.

The invention can be applied as a component in different fields of industry, such as electro-pneumatics, electro-hydraulics, circuit breaker, in the toy industry etc... but specifically in cattle raising. It is specifically designed to be used as a component in milking facilities within a milking room for animals (cows, sheep, goats, etc...).

It must be taken into account the fact that similar mechanism can be created for household or industry, the toy industry and also as a component in micro-machines, nano-machines, and some other types for different uses.

Up to now, all milking facilities which are marketed depend on certain factors, such as: the kind of animal to be milked (cow, sheep, goat, etc...), the number of heads of cattle to be milked in each milking operation, the number of workers, the milking time, the kind of milking rooms, etc... On the other hand, some of the elements or components forming a basic milking facility are: nipple-sets, for cattle milking; the collecting element, the first vessel where milk is collected after being milked by nipple sets; and the Final Unit of Milking (milk from each collecting funnel, corresponding to each animal, is sent to a container called the Final Unit of Milking, although it can be also collected with a chum or collected directly in the tank); another element is the tank (usually the Final Units of Milking have little capacity, thus collected milk is sent to a refrigerated tank), pipelines or connection ducts and other necessary components are also important so that the milking facilities can function properly.

There are two types of milking: fixed milking, if the animal remains still while being milked, and mobile milking, if the animal is moved while being milked. If we focus on the latter, we can mention a system, known in business as a Rotolactor or rotary room. In this system, milking is cyclic and continuous. Another system, being marketed presently, moves the animal by means of a conveyor belt with a system of auto-captures. The milk collecting-distributing mechanism of this invention is specifically designed for this system.

The main goal of this invention is to develop a milk collecting-distributing mechanism for animals (cows, sheep, goats, etc...) through which the milk obtained by milking with a series (n= 1, 2, 3...) of nipple sets ( having one, two, three, four, etc... nipples) is collected in a closed container: the Final Unit of Milking, Chum, Tank, etc...

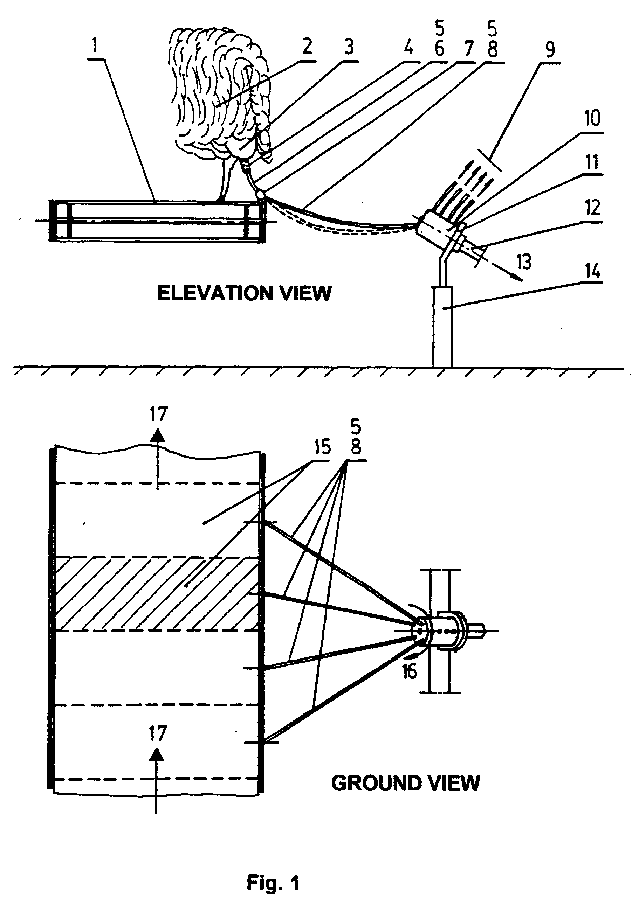

Let us see fig. 1. This figure shows the ground plan and elevation of part of a milking room. The milking room is formed by an animal guiding and auto-capture system (conveyor belt with an auto-capture system). The figure also shows part of a milking equipment or facility. This milking room moves the animals on and off of the conveyor belt one by one, while at the same time a number of animals are being milked simultaneously and continuously. For a series (n= 1, 2, 3,...) of animals (for instance, four) to be simultaneously and continuously milked, three conditions must be fulfilled: firstly, to supply the necessary air flow so that a series (n= 1, 2, 3...) of nipple sets (in this case four) can work simultaneously and continuously; the second is to collect and distribute simultaneously and continuously into a previously installed container the milk obtained by milking with series (n=1, 2, 3...) of the nipple set by means of a duct; and thirdly, owing to the fact that this is a cyclic and continuous milking operation, to enable cyclic and continuous rotation, either manually or automatically, of the collecting-distributing funnel (of the nipple sets) during the time the milking operation is carried out. The milk collecting-distributing mechanism is designed to fulfil these three conditions.

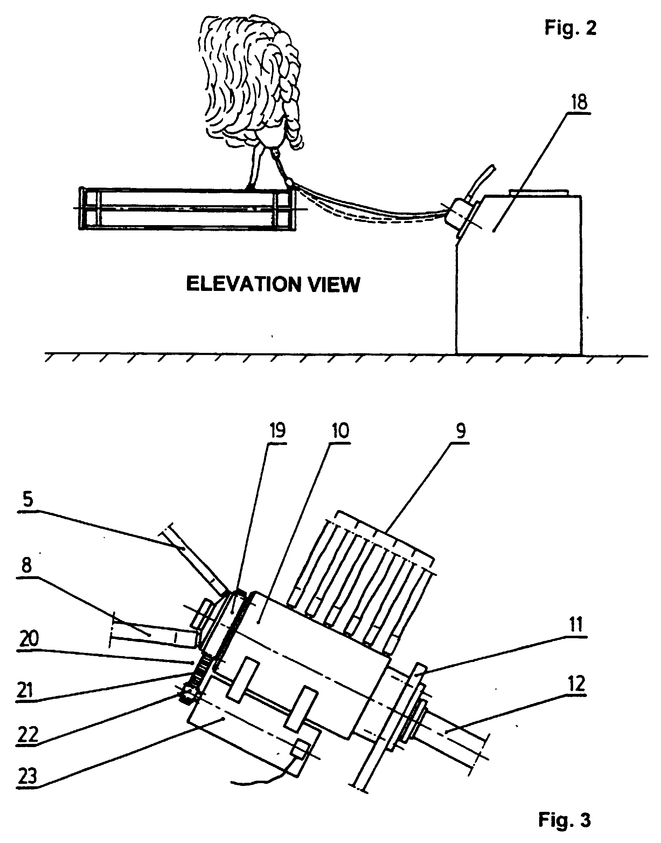

Fig. 2 shows the elevation of such a milking room. It differs from fig. 1 as the milk entering into the collecting-distributing mechanism is directly collected in the container (the Final Unit of Milking, Tank, Chum, etc...).

Fig. 3 shows the collecting-distributing mechanism fixed on the relevant support. It also shows the air and milk in/out ducts (pipelines or tubes). On the other hand, a reducing-varying-engine transmits an automatic turn movement to the collecting-distributing funnel of the mechanism.

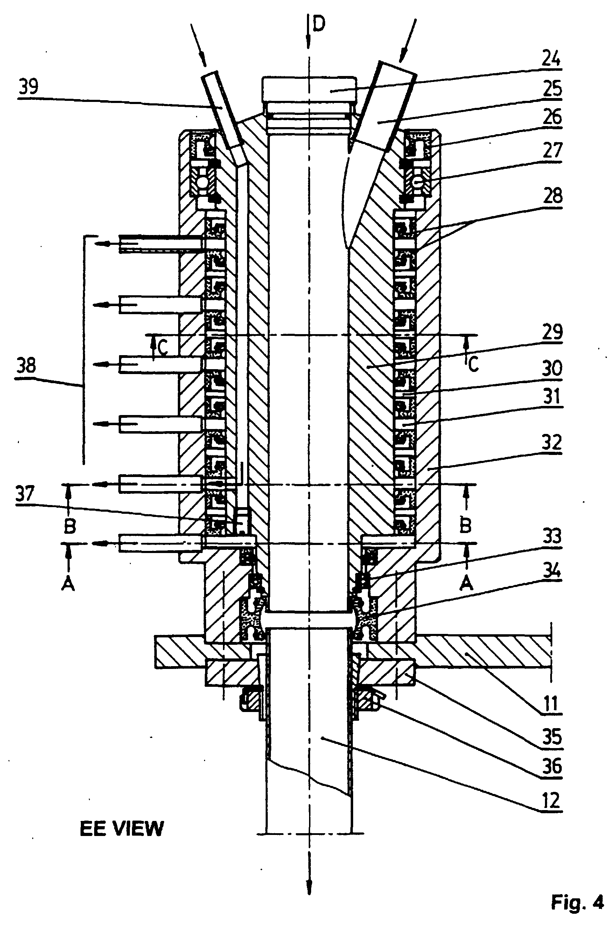

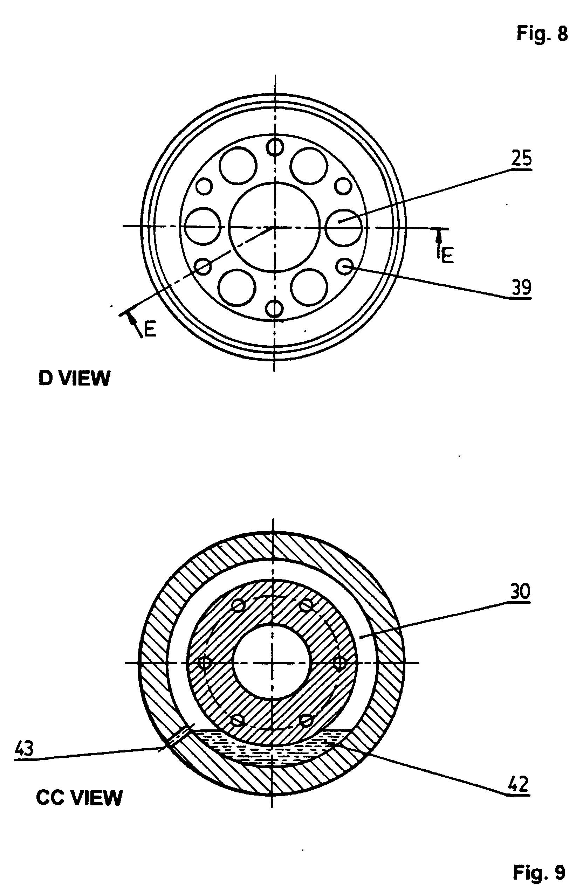

Fig. 4 shows an EE section view (fig. 8) of the milk collecting-distributing mechanism for animals. In this mechanism, the collecting-distributing funnel does not have the wheel shown at fig. 3, which is necessary for the movement to be automatic. As seen in fig. 4 and 8, this mechanism is designed for the simultaneous, continuous and independent milking of six animals. As it has six different and independent air ducts, each nipple set receives the pulsations separately. On the other hand, it also has six ducts to collect the milk obtained. For milking, the number (n= 1, 2, 3...) of air and milk ducts in the collecting funnel is usually the same (each nipple set needs one air duct and one milk duct). On the contrary, the number (n=1, 2, 3...) of air outlet ducts in the body is half the number of air intake ducts in the funnel. Every two nipple sets work with the same pulsing.

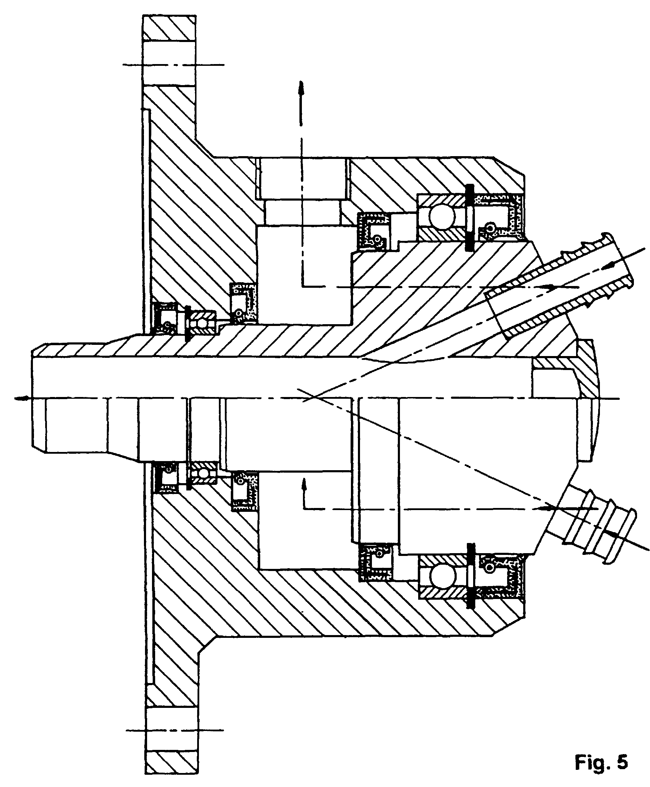

Fig. 5 shows a very similar collecting-distributing mechanism to that of fig. 4. The collecting-distributing funnel has a series (n=1, 2, 3...) of air and milk intake ducts (for instance, six air ducts and six milk ducts), and the body has only one air outlet duct. This makes the six nipple sets work with the same pulsing.

On the other hand, this mechanism can also be applied as a component in different fields, such as electro-pneumatics, electro-hydraulics, circuit breaker, etc... In such cases it might be called a *distributing mechanism*, as fluids (liquid, steam and/or gas) can flow in either direction through each of the ducts which in this example are planned for air and milk. For the latter applications, the number of possible combinations is much higher, including but not limited to: the fluid entering through two or more ducts of the funnel can always exit through only one duct in the body; the fluid entering through two or more ducts of the body can always exit through only one duct in the funnel, etc... That is, the series (n= 1, 2, 3...) of ducts in the body can be combined with the series (n=1, 2, 3...) of ducts in the funnel (in this example, air ducts), in the same way, the series (n=1, 2, 3...) of ducts in the funnel (in this example, milk ducts) join in a main duct. Two or more distributing mechanisms can also be joined to achieve a larger distributing mechanism.

All features described can be easily understood with the following description related to the attached drafts, where an example is given.

Figure 1 shows the ground plan and elevation of part of a milking room. The milking room is formed by an animal (2) guiding and auto-capture (1) system (conveyor belt with an auto-capture system) which moves in direction (17). On the conveyor belt we can see the space (15) where each animal (2) would be placed. The figure also shows part of a milking equipment or facility. The collecting-distributing mechanism (10) is fixed on the support (11). This support (11) is equally fixed to the wall (14). The collecting-distributing mechanism (10) has two main parts: the body (32) (fig. 4) fixed to support (11), and the collecting-distributing funnel (29) (fig. 4) which turns within the body (32). At milking, the conveyor belt with guiding and auto-capture system (1) moves the animals (2) and the milking equipment (nipple sets (4), collecting element (7), air duct (5) and milk ducts (6) and (8)) relating to each animal. This movement makes the funnel (29) turn in direction (16) and makes the sheep milking cyclic and continuous. The number of animals (2) (their udders (3) being simultaneously and continuously milked will be the same as the number of nipple sets (4) working simultaneously and continuously. The milk obtained is collected in a container (7) through the milk duct (6) (duct (5) is the air duct); from a container (7) it is sent to the collecting-distributing mechanism (10) through the milk duct (8) (duct (5) is the air duct). In this collecting-distributing mechanism (10) the milk coming from the series (n=1, 2, 3...) of nipple sets which are working at the time simultaneously and continuously is collected. From the collecting-distributing mechanism (10), through the duct (12) (in direction (13)) the milk is sent to a The Final Unit of Milking. On the other hand, milking equipments have powerful groups of vacuum. Depression or vacuum thus created is used to extract the air from one of the cavities of each nipple. This way, milk from the udder (3) of the animal is extracted. Every two milking pulsations, the existing air in one of the two nipple cavities (the nipple set may have a series of n=1, 2, 3... nipples) flows through the duct (5), travels through the holes made in the collecting-distributing funnel (29) and body (32) (fig. 4) and flows out through each of the ducts (9) towards the push button.

Figure 2 shows the elevation of part of a milking room. There, the collecting-distributing mechanism (10) is directly fixed to a closed container (18) for milk collection. This container (18) can be a The Final Unit of Milking, Tank, Chum, etc... Figure 3 shows the installation of the milk collecting-distributing mechanism (10) for animals fixed on the support (11). On the external part of the body (32) it has a reducing-varying engine (23), which makes the funnel (29) turn automatically (fig. 4). When the wheel (22) turns, the belt (21) is moved and the wheel (19) which is in the front part of the funnel (29) is turned. This transmission is blocked up by a lid (20). We can also see the air intake (5) and outlet ducts (9); the milk intake ducts (8) and outlet duct (12).

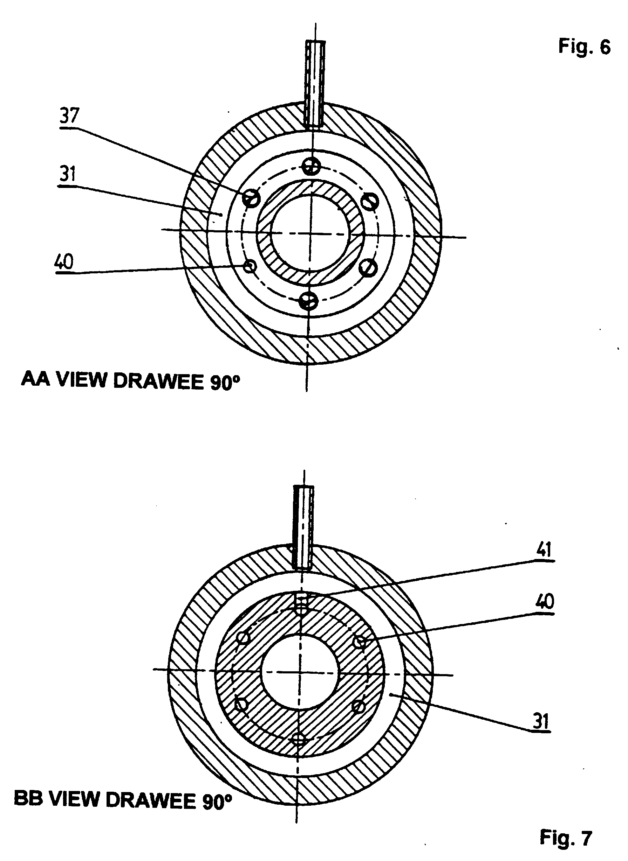

Figure 4 shows the collecting-distributing mechanism. (section EE of fig, 8). In this mechanism, the funnel (29) does not show the wheel (19) (fig. 3) necessary for the automatic turn movement. As seen in fig. 8, the front part of the funnel (29) has six holes (39) for air intake. In the same way, the body (32) has six holes (38) for air outlet. That is, each air intake hole has its relevant outlet hole. In this way, each nipple set works separately. On such front part there are also six holes (25) for milk intake. The milk coming from each hole (25) is collected in the main hole of the funnel and goes out through the tube (12). The connection between the backward side of the funnel (29) and the tube (12) is made by means of the gasket (34). The backward side of the funnel (29) turns with regard to the gasket (34); while the tube (12) remains fixed. The main hole of the funnel (29) is blocked up at its front part by a lid (24). When necessary, after each milking operation this lid (24) can be removed to clean the area where the six milk ducts meet. Bearings (27) and (33), and their respective elastic rings, fix the funnel (29) in the body (32) and make its movement within the body (32) easier. The gasket (26) blocks the entry of water, dust, etc... and the exit of grease from the lubricated bearings. Each pair of gaskets (28) allows each air flow cavity (31) to be independent from the rest of the cavities (in this case, from cavities (30)) and from outside. Cavity (30) is connected to the outside through the hole (43) (fig. 9). The tube (12), through the fixing handles (36) and the disk (35), and the body (32) are placed and fixed to the support (11) by means of the relevant supporting elements. The ducts (40) (fig 6) of the six air holes (39) line the funnel (29) from one side to the other. However, in order for the ducts to be independent, five of the six holes are blocked by a prisoner screw (37). When the milking room is cleaned, the collecting-distributing mechanism would be cleaned in the following way: water coming from the ducts (8) (fig. 3) will enter through each of the holes (25) and will exit through the hole (12). For a more sufficient clean of the main hole, the lid (24) can be removed and a new water duct can be connected in this hole. This way cleaning can be more efficient. Figure 5 shows a simplified model of the milk collecting-distributing mechanism for animals. This model can be directly fixed in the closed container to collect milk (The Final Unit of Milking, Tank, Churn...) It is different from the previous one, as the series of holes (six, for instance) for air intake in the funnel join and exit through an outlet hole placed in the body.

Figure 6 shows an AA section of the collecting-distributing mechanism (10) (fig. 4). It shows the six air ducts (40) which have been made. Five of the six ducts (40) are blocked up by prisoner screws. This cavity (31) only needs one of the ducts (40) to be free.

Figure 7 shows a BB section of the collecting-distributing mechanism (10) (fig. 4). It shows one of the five remaining connections between the hole (39) in the funnel (29) and the hole (38) in the body (32). This connection is made by a radial hole (41) in the funnel, thus connecting the duct (40) to the cavity (31).

Figure 8 shows a D section (partial representation) of the collecting-distributing mechanism (10) (fig. 4). It shows the distribution of the six holes (25) for the milk intake, the six holes (39) for the air intake, and the main hole of the funnel (29).

Figure 9 shows a CC section of the collecting-distributing mechanism (10) (fig. 4).

Each pair of gaskets, on both sides, is separated by a cavity (30). The body (32) has a hole (43) for each cavity (30). The hole (43) has two functions: firstly, to make the lubricant intake easier so that the gaskets (28) are lubricated; and secondly, to check the correct function (proper blocking) of the gaskets (28) on each side of the cavity (30). If the gaskets (28)( d)o not block properly, air will get in through the hole (43).

This hole is made in such a way that the level of the container (42) exceeds and lubricates the lip of the gaskets (28).

The aforesaid provisions may be amended without altering the main principle.

## Claims

1. Milk collecting-distributing mechanism for animals (cows, sheep, goats, etc.) characterized by its specific designed to collect milk from a milking operation in a closed container. Said mechanism consists of a body and a collecting-distributing funnel. The body can be fixed to a previously installed container or support. Said milk collecting-distributing mechanism performs three main functions: firstly, to supply the necessary air flow so that a series (n = 1, 2, 3...) of nipple sets (having one, two, three, four, etc. nipples) can work simultaneously and continuously; secondly, to collect simultaneously and continuously into a previously installed container or collect and distribute into said container the milk obtained by milking with series (n = 1, 2, 3...) of the nipple set by means of a duct and thirdly, owing to the fact that this is a cyclic and continuos milking operation, to enable cyclic and continuos rotation either manually or automatically of the collecting-distribution funnel (of the nipple sets) during the time that the milking operation is carried out.

2. Milk collecting-distributing mechanism for animals as described in claim 1, characterized by its specific design to be installed as a component in mobile milking rooms, such as the rotary room or Rotolactor and milking by a conveyor belt with auto-capture system.

3. Milk collecting-distributing mechanism for animals as described in claims 1 and 2. It is characterized by a reducing-varying engine fixed in the body of the mechanism, which transmits the automatic turn movement (if necessary) to the collecting-distributing funnel. That is why this collecting-distributing funnel has a wheel on its front side.

4. Milk collecting-distributing mechanism for animals as described in claims 1 to 3, characterized by a series (n= 1, 2, 3..) of holes for air intake placed on the front side of the collecting-distributing funnel. In the same way, the body has a series (n= 1, 2, 3...) of holes for the air outlet. If the number of intake and outlet holes are the same, each nipple set will work independently. On this front side there is also a series (n= 1, 2, 3...) of holes for milk intake. Each nipple set has a milk pipeline and an air pipeline. Therefore, the number of holes for air intake and milk intake on the front part of the funnel must be the same. The milk entering through each of the holes is collected in the main hole of the funnel and exits through the back duct. The connection between the back side of the funnel and the duct is made by a gasket. The back side of the funnel turns around the gasket while the duct remains fixed. The body of the mechanism and the milk duct on the back side are placed and fixed to the support by means of the relevant supporting elements. The ducts are placed and fixed by means of a supporting handle and disk. The main hole of the funnel is blocked on its front side by a lid. When necessary, after each milking operation this lid can be removed to clean the area where the milk ducts join. Bearings and their respective elastic rings, fix the funnel in the body and make its movement within the body easier. On the front side of the mechanism there is a gasket to block the intake of water, dust, etc... and the exit of grease from the lubricated bearings. To isolate the air ducts within the body, each duct is isolated from the others by means of two gaskets. Between these two gaskets there is a cavity which joins the air intake and outlet ducts. Between each pair of gaskets there is also a cavity connected to the outside through a hole. The series (n= 1, 2, 3...) of air ducts in the funnel line it from one side to the other. For the ducts to be independent, they are all but one blocked with prisoner screws, soldering etc... on the back side. The rest of air ducts, in the section containing the cavity made by the two gaskets, are separately connected to each cavity by means of a radial hole made in the funnel. Between each pair of gaskets there is a cavity connected to the outside through a hole made in the body. This hole has two different roles: firstly, to allow the lubricant intake so that the gaskets are lubricated; and secondly, to check the correct function (proper blocking) of such gaskets. If the gaskets do not block properly, air will get in through the holes made in the funnel. The holes are made in such a way that the level of the container exceeds and lubricates the lip of the gaskets.

5. Milk collecting-distributing mechanism for animals as described in claims 1 to 4, characterized by a series (six, for instance) of independent air ducts. Each nipple set gets pulsation independently. However, the number (n= 1, 2, 3...) of ducts for the air outlet in the body can be the same or different from the number of intake ducts in the funnel. For instance, if the number of ducts for the air outlet in the body is half the number of ducts for the air intake in the funnel, every two nipple sets wilt work with the same pulsation.

6. Milk collecting-distributing mechanism for animals as described in claims 1 to 5, characterized because at milking room cleaning the collecting-distributing funnel would be cleaned as follows: water coming from the ducts (those ducts acting as milk ducts at milking) of the front side of the funnel will exit through the main duct of the back side of the mechanism. For a more sufficient clean of the main hole of the funnel, the top can be removed and a new water duct can be connected in this hole. In this way cleaning can be better and faster.

7. Milk collecting-distributing mechanism for animals as described in claims 1 to 6, characterized because the air and milk/water connection systems (hoses, tangs, pipelines, etc...), the blocking and stagnating systems (gaskets, joints, etc...). surface quality and material used to make the body and the collecting funnel, etc... are the correct ones to work correctly.

8. Milk collecting-distributing mechanism for animals as described in claims 1 to 7, characterized because it can be installed as a component in different fields of industry, such as electro-pneumatics, electro-hydraulics, circuit breaker, in the toy industry etc... Similar mechanisms might also be created for household or industry, and also as a component in micro-machines, nano-machines, and some other types for different uses. In such cases it might be called a *distributing mechanism*, as fluids (liquid, steam and/or gas) can flow in either direction through each of the ducts which are planned for air and milk. For the latter applications, the number of combinations is much higher, including but not limited to: the fluid entering through two or more ducts of the funnel can always exit through only one duct in the body; the fluid entering through two or more ducts of the body can always exit through only one duct in the funnel, etc... That is, the series (n= 1, 2, 3...) of ducts in the body can be combined with the series (n=1, 2, 3...) of ducts in the funnel (in this example, air ducts), in the same way, the series (n=1, 2, 3...) of ducts in the funnel (in this example, milk ducts) join in a main duct. Two or more distributing mechanisms can also be joined to each other to create a larger distributing mechanism.
